(19) Europäisches Patentamt
European Patent Office
Office européen des brevets

(11) **EP 4 361 559 B1**

(12) **EUROPEAN PATENT SPECIFICATION**

(45) Date of publication and mention
of the grant of the patent:
**01.10.2025 Bulletin 2025/40**

(21) Application number: **23193845.7**

(22) Date of filing: **29.08.2023**

(51) International Patent Classification (IPC):
***G01C 19/5656*** *(2012.01)*

(52) Cooperative Patent Classification (CPC):
**G01C 19/5656**

(54) **ANGULAR VELOCITY DETECTION ELEMENT AND ANGULAR VELOCITY SENSOR**

ELEMENT ZUR ERKENNUNG DER WINKELGESCHWINDIGKEIT UND
WINKELGESCHWINDIGKEITSSENSOR

ÉLÉMENT DE DÉTECTION DE VITESSE ANGULAIRE ET CAPTEUR DE VITESSE ANGULAIRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.08.2022 JP 2022136281**

(43) Date of publication of application:
**01.05.2024 Bulletin 2024/18**

(73) Proprietor: **Seiko Epson Corporation
Tokyo 160-8801 (JP)**

(72) Inventors:
• **OGURA, Seiichiro**
  **Suwa-shi, 392-8502 (JP)**

• **YAMAGUCHI, Keiichi**
  **Suwa-shi, 392-8502 (JP)**
• **NISHIZAWA, Ryuta**
  **Suwa-shi, 392-8502 (JP)**

(74) Representative: **Lewis Silkin LLP
Arbor
255 Blackfriars Road
London SE1 9AX (GB)**

(56) References cited:
**CN-B- 105 207 642      JP-A- 2003 166 828
JP-A- 2005 062 160      JP-A- 2016 090 252
US-A1- 2015 116 974     US-A1- 2016 204 334
US-A1- 2020 200 533     US-B2- 11 025 222**

**Description**

BACKGROUND

1. Technical Field

The present disclosure relates to an angular velocity detection element and an angular velocity sensor.

2. Related Art

A vibrator disclosed in JP-A-2003-166828 includes a base portion positioned in a central portion of the vibrator, a pair of detection vibration arms extending from the base portion to both sides in a Y-axis direction, a pair of coupling arms extending from the base portion to both sides in an X-axis direction, a pair of drive vibration arms extending from a tip end portion of one coupling arm to the both sides in the Y-axis direction, and a pair of drive vibration arms extending from a tip end portion of the other coupling arm to the both sides in the Y-axis direction. Grooves are formed at upper and lower surfaces of the detection vibration arms and the drive vibration arms. Thus, detection sensitivity of an angular velocity can be improved by forming the grooves at the upper and lower surfaces of the detection vibration arms and the drive vibration arms.

However, in the vibrator according to JP-A-2003-166828, a depth of the grooves of the detection vibration arms is the same as a depth of the grooves of the drive vibration arms. Thus, when the depth of the grooves of the detection vibration arms and the depth of the grooves of the drive vibration arms are the same, it is difficult to increase the detection sensitivity of the angular velocity even when the grooves are deep.

SUMMARY

An angular velocity detection element according to the present disclosure includes: a drive vibration arm configured to perform flexural vibration according to an applied drive signal; and a detection vibration arm configured to perform flexural vibration according to an applied angular velocity, in which each of the drive vibration arm and the detection vibration arm has a bottomed groove portion along an extending direction, and $d2/t2 > d1/t1$, in which $t1$ is a thickness of the drive vibration arm, $d1$ is a depth of the groove portion of the drive vibration arm, $t2$ is a thickness of the detection vibration arm, and $d2$ is a depth of the groove portion of the detection vibration arm.

An angular velocity sensor according to the present disclosure includes: the above-described angular velocity detection element; and a control circuit electrically coupled to the angular velocity detection element, and configured to supply the drive signal to the angular velocity detection element and detect an angular velocity based on the flexural vibration.

BRIEF DESCRIPTION OF THE DRAWINGS

FIG. 1 is a cross-sectional view showing an angular velocity sensor according to a first embodiment.
FIG. 2 is a plan view of an angular velocity detection element in the angular velocity sensor in FIG. 1.
FIG. 3 is a cross-sectional view taken along a line A-A in FIG. 2.
FIG. 4 is a cross-sectional view taken along a line B-B in FIG. 2.
FIG. 5 is a schematic diagram showing a driving state of the angular velocity detection element shown in FIG. 2.
FIG. 6 is a schematic diagram showing a driving state of the angular velocity detection element shown in FIG. 2.
FIG. 7 is a graph showing a relationship between $d1$ and sensitivity when $d1 = d2$.
FIG. 8 is a graph showing a relationship between $d2/d1$ and sensitivity.
FIG. 9 is a graph showing a relationship between $d2$ and sensitivity when $d2/d1 = 1$ and $d2/d1 = 2$.
FIG. 10 is a graph showing a relationship between $d2$ and sensitivity when $d1 = d2$, $d1 = 20\ \mu m$, $d1 = 40\ \mu m$, $d1 = 60\ \mu m$, and $d1 = 80\ \mu m$.
FIG. 11 is a graph showing a relationship between $d1/t1$ and $d2/t2$.
FIG. 12 is a cross-sectional view showing a modification of the angular velocity detection element, and corresponds to a cross-sectional view taken along the line A-A in FIG. 2.
FIG. 13 is a cross-sectional view showing a modification of the angular velocity detection element, and corresponds to a cross-sectional view taken along the line B-B in FIG. 2.
FIG. 14 is a plan view showing an angular velocity detection element according to a second embodiment.
FIG. 15 is a cross-sectional view taken along a line C-C in FIG. 14.

FIG. 16 is a cross-sectional view taken along a line D-D in FIG. 14.

FIG. 17 is a schematic diagram showing a driving state of the angular velocity detection element shown in FIG. 14.

FIG. 18 is a schematic diagram showing a driving state of the angular velocity detection element shown in FIG. 14.

DESCRIPTION OF EMBODIMENTS

Hereinafter, an angular velocity detection element and an angular velocity sensor according to the present disclosure will be described in detail based on embodiments shown in the accompanying drawings.

First Embodiment

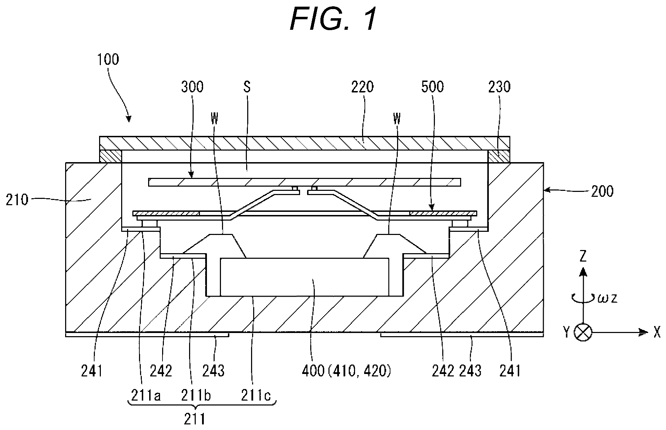

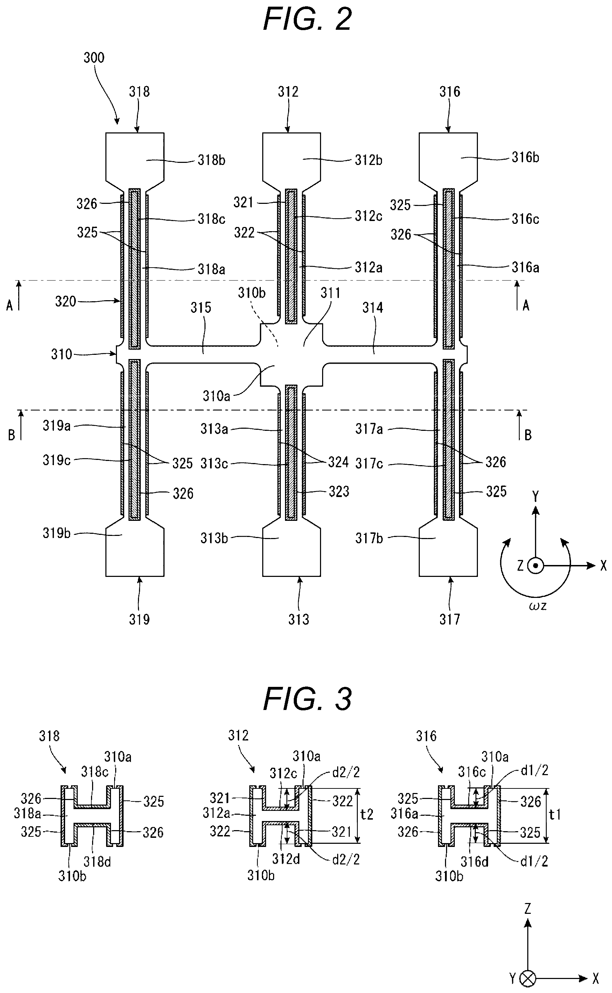

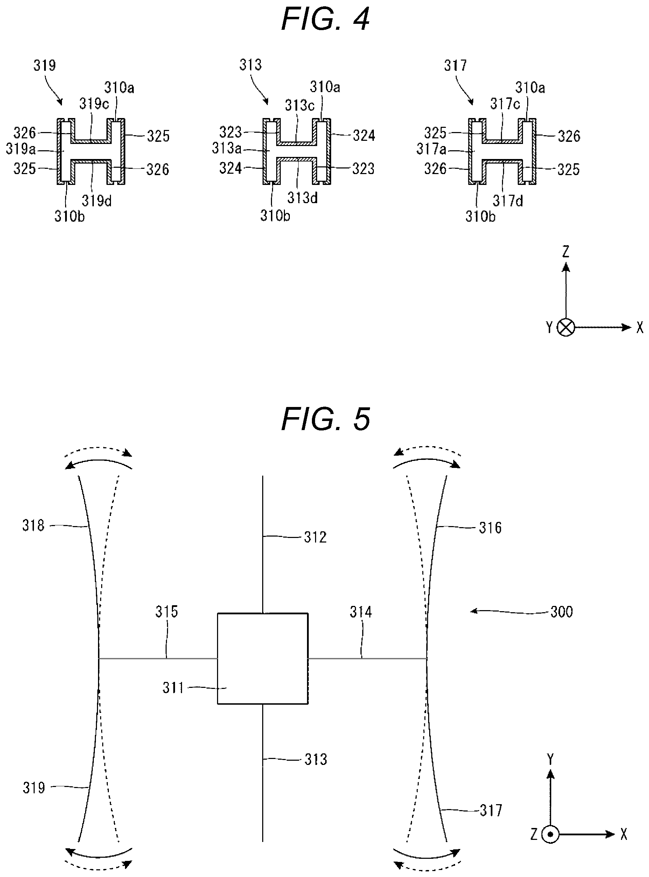

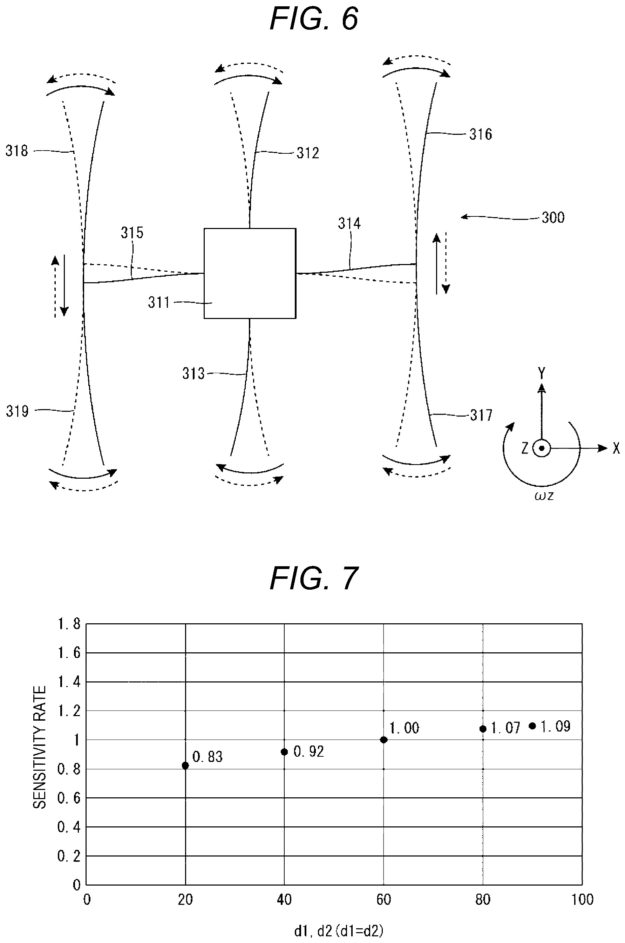

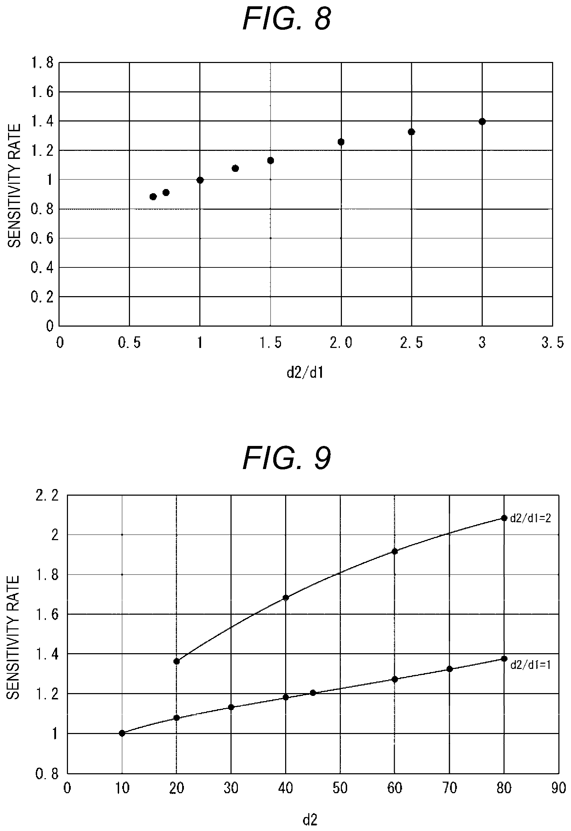

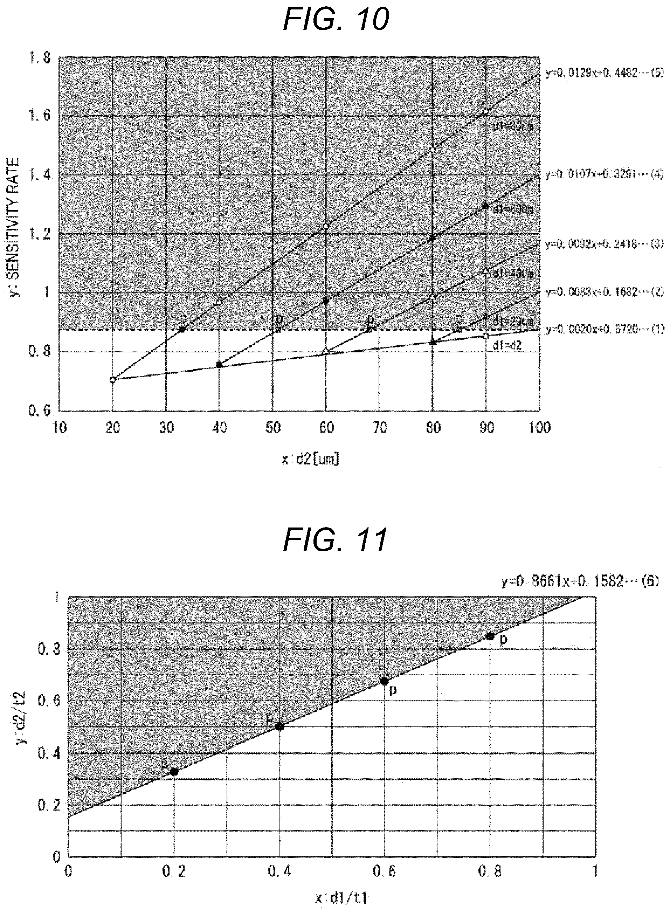

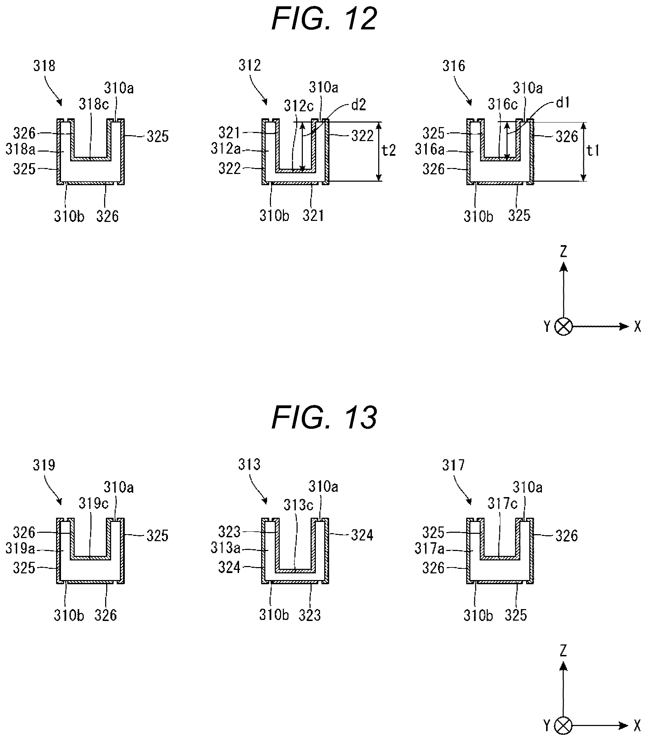

FIG. 1 is a cross-sectional view showing an angular velocity sensor according to a first embodiment. FIG. 2 is a plan view of an angular velocity detection element in the angular velocity sensor in FIG. 1. FIG. 3 is a cross-sectional view taken along a line A-A in FIG. 2. FIG. 4 is a cross-sectional view taken along a line B-B in FIG. 2. FIGS. 5 and 6 are schematic diagrams showing driving states of the angular velocity detection element shown in FIG. 2. FIG. 7 is a graph showing a relationship between d1 and sensitivity when d1 = d2. FIG. 8 is a graph showing a relationship between d2/d1 and sensitivity. FIG. 9 is a graph showing a relationship between d2 and sensitivity when d2/d1 = 1 and d2/d1 = 2. FIG. 10 is a graph showing a relationship between d2 and sensitivity when d1 = d2, d1 = 20 $\mu$m, d1 = 40 $\mu$m, d1 = 60 $\mu$m, and d1 = 80 $\mu$m. FIG. 11 is a graph showing a relationship between d1/t1 and d2/t2. FIG. 12 is a cross-sectional view showing a modification of the angular velocity detection element, and corresponds to a cross-sectional view taken along the line A-A in FIG. 2. FIG. 13 is a cross-sectional view showing a modification of the angular velocity detection element, and corresponds to a cross-sectional view taken along the line B-B in FIG. 2.

Hereinafter, for convenience of description, an X-axis, a Y-axis, and a Z-axis, which are three axes orthogonal to one another, are shown. A direction along the X-axis is also referred to as an X-axis direction, a direction along the Y-axis is also referred to as a Y-axis direction, and a direction along the Z-axis is also referred to as a Z-axis direction. An arrow side of each axis is also referred to a "plus side", and an opposite side is also referred to a "minus side". A plus side in the Z-axis direction is also referred to as "upper", and a minus side in the Z-axis direction is also referred to as "lower". A plan view from the Z-axis direction is also simply referred to as a "plan view".

An angular velocity sensor 100 shown in FIG. 1 includes a package 200, an angular velocity detection element 300 accommodated in the package 200, a support substrate 500 supporting the angular velocity detection element 300, and a control circuit 400.

The package 200 includes a box-shaped base 210 having a recessed portion 211 opened in an upper surface, and a plate-shaped lid 220 bonded to the upper surface of the base 210 via a bonding member 230 so as to close an opening of the recessed portion 211. An airtight internal space S is formed inside the package 200 by the recessed portion 211, and the angular velocity detection element 300, the support substrate 500, and the control circuit 400 are accommodated in the internal space S.

The recessed portion 211 includes a first recessed portion 211a which opens in the upper surface of the base 210, a second recessed portion 211b which opens in a bottom surface of the first recessed portion 211a and has an opening smaller than that of the first recessed portion 211a, and a third recessed portion 211c which opens in a bottom surface of the second recessed portion 211b and has an opening smaller than that of the second recessed portion 211b. A plurality of internal terminals 241 are disposed at the bottom surface of the first recessed portion 211a, a plurality of internal terminals 242 are disposed at the bottom surface of the second recessed portion 211b, and a plurality of external terminals 243 are disposed at a lower surface of the base 210. Each internal terminal 242 is electrically coupled to an internal terminal 241 or an external terminal 243 via an internal wiring (not shown) formed in the base 210.

The angular velocity detection element 300 is mounted at the bottom surface of the first recessed portion 211a via the mounting support substrate 500 called tape automated bonding (TAB). The internal terminals 241 and the angular velocity detection element 300 are electrically coupled via the support substrate 500. The control circuit 400 is mounted at a bottom surface of the third recessed portion 211c. The control circuit 400 and the internal terminal 242 are electrically coupled via a conductive wire W. Accordingly, the control circuit 400 is electrically coupled to the angular velocity detection element 300 and the external terminal 243.

For example, the base 210 is made of ceramics such as alumina, and the lid 220 is made of a metal material such as Kovar. Accordingly, the package 200 has excellent mechanical strength. A difference in linear expansion coefficients can be reduced, and occurrence of thermal stress can be reduced. Constituent materials for the base 210 and the lid 220 are not particularly limited. The internal space S is in a depressurized state, preferably in a state closer to vacuum. Accordingly, viscous resistance decreases and vibration characteristics of the angular velocity detection element 300 are improved. An atmosphere of the internal space S is not particularly limited.

The package 200 has been described above. A configuration of the package 200 is not particularly limited.

The control circuit 400 is electrically coupled to the angular velocity detection element 300, and includes, for example, a drive circuit 410 for supplying a drive signal to be described later to the angular velocity detection element 300 so as to drive and vibrate the angular velocity detection element 300, and a detection circuit 420 for detecting angular velocity $\omega z$ based on a detection signal output from the angular velocity detection element 300 according to an applied angular velocity.

Such a control circuit 400 may be disposed outside the package 200. The control circuit 400 may be omitted.

The angular velocity detection element 300 can detect the angular velocity $\omega z$ around the Z-axis. As shown in FIGS. 2 to 4, such an angular velocity detection element 300 includes a vibration substrate 310 formed by patterning a Z-cut quartz crystal substrate, and an electrode 320 deposited at a surface of the vibration substrate 310.

A constituent material for the vibration substrate 310 is not limited to quartz crystal, and various piezoelectric materials such as lithium niobate ($LiNbO_3$), lithium tantalate ($LiTaO_3$), lead zirconate titanate (PZT), lithium tetraborate ($Li_2B_4O_7$), and langasite crystal ($La_3Ga_5SiO_{14}$) can be used.

The vibration substrate 310 has a plate shape and has an upper surface 310a as a first surface and a lower surface 310b as a second surface, which are in a front and back relationship with each other. The vibration substrate 310 includes a base portion 311 positioned in a central portion of the vibration substrate 310, a pair of detection vibration arms 312 and 313 extending from the base portion 311 to both sides in the Y-axis direction, a pair of support arms 314 and 315 extending from the base portion 311 to both sides in the X-axis direction, a pair of drive vibration arms 316 and 317 extending from a tip end portion of one support arm 314 to the both sides in the Y-axis direction, and a pair of drive vibration arms 318 and 319 extending from a tip end portion of the other support arm 315 to the both sides in the Y-axis direction. The base portion 311 is bonded to the support substrate 500. According to the angular velocity detection element 300 having such a shape, since the drive vibration arm 316, 317, 318, and 319 perform flexural vibration in a well-balanced manner as described later, the angular velocity $\omega z$ can be detected with high accuracy. Hereinafter, the detection vibration arms and the drive vibration arms are collectively simply referred to as vibration arms.

The detection vibration arm 312 includes an arm 312a extending from the base portion 311 to a plus side in the Y-axis direction, and a weight portion 312b positioned at a tip end side of the arm 312a and having a width (length in the X-axis direction) wider than that of the arm 312a. The detection vibration arm 312 includes a bottomed groove portion 312c formed in the upper surface 310a of the arm 312a and a bottomed groove portion 312d formed in the lower surface 310b of the arm 312a. The groove portions 312c and 312d are formed along the arm 312a and over substantially an entire region of the arm 312a in a longitudinal direction. The groove portions 312c and 312d are symmetrically formed.

The detection vibration arm 313 includes an arm 313a extending from the base portion 311 to a minus side in the Y-axis direction, and a weight portion 313b positioned at a tip end side of the arm 313a and having a width wider than that of the arm 313a. The detection vibration arm 313 includes a bottomed groove portion 313c formed in the upper surface 310a of the arm 313a and a bottomed groove portion 313d formed in the lower surface 310b of the arm 313a. The groove portions 313c and 313d are formed along the arm 313a and over substantially an entire region of the arm 313a in the longitudinal direction. The groove portions 313c and 313d are symmetrically formed.

The drive vibration arm 316 includes an arm 316a extending from the support arm 314 to the plus side in the Y-axis direction, and a weight portion 316b positioned at a tip end side of the arm 316a and having a width wider than that of the arm 316a. The drive vibration arm 316 includes a bottomed groove portion 316c formed in the upper surface 310a of the arm 316a and a bottomed groove portion 316d formed in the lower surface 310b of the arm 316a. The groove portions 316c and 316d are formed along the arm 316a and over substantially an entire region of the arm 316a in the longitudinal direction. The groove portions 316c and 316d are symmetrically formed.

The drive vibration arm 317 includes an arm 317a extending from the support arm 314 to the minus side in the Y-axis direction, and a weight portion 317b positioned at a tip end side of the arm 317a and having a width wider than that of the arm 317a. The drive vibration arm 317 includes a bottomed groove portion 317c formed in the upper surface 310a of the arm 317a and a bottomed groove portion 317d formed in the lower surface 310b of the arm 317a. The groove portions 317c and 317d are formed along the arm 317a and over substantially an entire region of the arm 317a in the longitudinal direction. The groove portions 317c and 317d are symmetrically formed.

The drive vibration arm 318 includes an arm 318a extending from the support arm 315 to the plus side in the Y-axis direction, and a weight portion 318b positioned at a tip end side of the arm 318a and having a width wider than that of the arm 318a. The drive vibration arm 318 includes a bottomed groove portion 318c formed in the upper surface 310a of the arm 318a and a bottomed groove portion 318d formed in the lower surface 310b of the arm 318a. The groove portions 318c and 318d are formed along the arm 318a and over substantially an entire region of the arm 318a in the longitudinal direction. The groove portions 318c and 318d are symmetrically formed.

The drive vibration arm 319 includes an arm 319a extending from the support arm 315 to the minus side in the Y-axis direction, and a weight portion 319b positioned at a tip end side of the arm 319a and having a width wider than that of the arm 319a. The drive vibration arm 319 includes a bottomed groove portion 319c formed in the upper surface 310a of the arm 319a and a bottomed groove portion 319d formed in the lower surface 310b of the arm 319a. The groove portions 319c and 319d are formed along the arm 319a and over substantially an entire region of the arm 319a in the longitudinal direction. The groove portions 319c and 319d are symmetrically formed.

**EP 4 361 559 B1**

Thus, by disposing the weight portions 312b, 313b, 316b, 317b, 318b, and 319b at the vibration arms 312, 313, 316, 317, 318, and 319, by a mass effect thereof, it is possible to shorten the vibration arms 312, 313, 316, 317, 318, and 319 so as to reduce a size of the angular velocity detection element 300 or lower a resonance frequency of the angular velocity detection element 300. When the vibration arms 312, 313, 316, 317, 318, and 319 have the same length, the arms 312a, 313a, 316a, 317a, 318a, and 319a can be made thicker than in a configuration without the weight portions 312b, 313b, 316b, 317b, 318b, and 319b, a thermoelastic loss during flexural vibration is reduced accordingly, and a Q value is increased. It is also possible to finely adjust the resonance frequency by disposing a metal film for mass adjustment at the weight portions 312b, 313b, 316b, 317b, 318b, and 319b and removing a part of the metal film by laser irradiation or the like. The weight portions 312b, 313b, 316b, 317b, 318b, and 319b may be omitted.

The electrode 320 includes first detection signal electrodes 321, first detection ground electrodes 322, second detection signal electrodes 323, second detection ground electrodes 324, drive signal electrodes 325, and drive ground electrodes 326. The first detection signal electrodes 321 are disposed at the upper surface 310a and the lower surface 310b of the detection vibration arm 312, and the first detection ground electrodes 322 are disposed at both side surfaces of the detection vibration arm 312. The second detection signal electrodes 323 are disposed at the upper surface 310a and the lower surface 310b of the detection vibration arm 313, and the second detection ground electrodes 324 are disposed at both side surfaces of the detection vibration arm 313. The drive signal electrodes 325 are disposed at the upper surface 310a and the lower surface 310b of the drive vibration arms 316 and 317 and at both side surfaces of the drive vibration arms 318 and 319. The drive ground electrodes 326 are disposed at both side surfaces of the drive vibration arm 316 and 317 and at the upper surface 310a and the lower surface 310b of the drive vibration arms 318 and 319. Although not shown, the electrodes 321, 322, 323, 324, 325, and 326 are drawn to a lower surface of the base portion 311 and are electrically coupled to the support substrate 500 at the lower surface of the base portion 311.

A configuration of the angular velocity detection element 300 has been briefly described above. The angular velocity detection element 300 having such a configuration detects the angular velocity ωz around the Z-axis as follows.

When drive signals are applied between the drive signal electrodes 325 and the drive ground electrodes 326, as shown in FIG. 5, the drive vibration arms 316 and 317 and the drive vibration arms 318 and 319 perform flexural vibration in opposite phases in the X-axis direction (this state is also referred to as a "drive vibration mode"). In this state, vibration of the drive vibration arms 316, 317, 318, and 319 is cancelled, and the detection vibration arms 312 and 313 do not vibrate. In this state, when the angular velocity ωz is applied to the angular velocity detection element 300, as shown in FIG. 6, Coriolis force acts on the drive vibration arms 316, 317, 318, and 319 to excite flexural vibration in the Y-axis direction, and the detection vibration arms 312 and 313 perform flexural vibration in the X-axis direction in response to the flexural vibration (this state is also referred to as a "detection vibration mode"). An electric charge generated in the detection vibration arm 312 by such flexural vibration is taken out as a first detection signal from the first detection signal electrodes 321, an electric charge generated in the detection vibration arm 313 is taken out as a second detection signal from the second detection signal electrodes 323, and the angular velocity ωz is obtained based on the first detection signal and the second detection signal. Since the first detection signal and the second detection signal have opposite phases, the angular velocity ωz can be detected more accurately by using a differential detection method.

Next, a configuration of the groove portions formed in the vibration arms 312, 313, 316, 317, 318, and 319 will be described in detail. The detection vibration arms 312 and 313 have a similar configuration, and the drive vibration arms 316, 317, 318, and 319 have a similar configuration. Therefore, in the following description, for convenience of description, regarding the detection vibration arms 312 and 313, the detection vibration arm 312 will be described as a representative, and regarding the drive vibration arms 316, 317, 318, and 319, the drive vibration arm 316 will be described as a representative.

As described above, the pair of groove portions 312c and 312d are formed in the detection vibration arm 312, and the pair of groove portions 316c and 316d are formed in the drive vibration arm 316. Therefore, a heat transfer path during flexural vibration of the vibration arms 312 and 316 can be lengthened, a thermoelastic loss is reduced, and a Q value is increased. Further, the vibration arms 312 and 316 become soft, and are easily flexed and deformed in the X-axis direction. Therefore, an amplitude of the drive vibration arm 316 in the drive vibration mode can be increased. As the amplitude of the drive vibration arm 316 increases, Coriolis force increases, and an amplitude of the detection vibration arm 312 in the detection vibration mode increases. Therefore, a larger detection signal is obtained, and detection sensitivity of the angular velocity ωz is increased.

Hereinafter, as shown in FIG. 3, a relationship between d2/t2 and d1/t1 will be described in detail, where t1 is a thickness of the drive vibration arm 316, d1 is a depth of the groove portions 316c and 316d of the drive vibration arm 316, t2 is a thickness of the detection vibration arm 312, and d2 is a depth of the groove portions 312c and 312d of the detection vibration arm 312. d1 is a total depth of the groove portions 316c and 316d. Since the groove portions 316c and 316d are symmetrically formed, a depth of each of the groove portions 316c and 316d is d1/2. Similarly, d2 is a total depth of the groove portions 312c and 312d. Since the groove portions 312c and 312d are symmetrically formed, a depth of each of the groove portions 312c and 312d is d2/2.

For example, when the vibration substrate 310 is patterned by wet etching, a crystal angle of quartz crystal may

5

appear, and the groove portions 312c, 312d, 316c, and 316d may have a shape having a non-constant depth. In such a case, depths of the groove portions 312c, 312d, 316c, and 316d mean a depth at the deepest portion. In the embodiment, t1 and t2 correspond to a plate thickness of the vibration substrate 310, and t1 = t2. The present disclosure is not limited thereto, and t1 ≠ t2 may be satisfied.

FIG. 7 shows a relationship between d1, d2 (where d1 = d2) and the detection sensitivity (sensitivity) of the angular velocity ωz. A plate thickness of the vibration substrate 310, that is, t1 and t2, is 100 μm. The detection sensitivity is represented by a rate when the detection sensitivity is set to 1 when d1 and d2 are 60 μm. As can be seen from the figure, the detection sensitivity increases as d1 and d2 become deeper. However, when d1 and d2 are 90 μm (90% of the plate thickness), the detection sensitivity is only 1.09 times higher than that when d1 and d2 are 60 μm (60% of the plate thickness). Therefore, it can be seen that when d1 = d2, it is difficult to increase the detection sensitivity even when d1 and d2 are increased.

FIG. 8 shows a relationship between d2/d1 and the detection sensitivity. The plate thickness of the vibration substrate 310, that is, t1 and t2, is 100 μm. The detection sensitivity is represented by a rate when the detection sensitivity is set to 1 when d2/d1 = 1 in a configuration in the related art. As can be seen from the figure, the detection sensitivity increases as d2/d1 increases. That is, the deeper the groove portions 312c and 312d of the detection vibration arm 312 are with respect to the groove portions 316c and 316d of the drive vibration arm 316, the higher the detection sensitivity. It can be seen that the detection sensitivity can be increased in a region of d2/d1 > 1 compared with the configuration in the related art. Therefore, in the angular velocity detection element 300, d2/d1 > 1, that is, d2/t2 > d1/t1. Accordingly, the detection sensitivity can be increased as compared with the configuration in the related art.

FIG. 9 shows a relationship between d2 and the detection sensitivity when d2/d1 = 1 and d2/d1 = 2. The plate thickness of the vibration substrate 310, that is, t1 and t2, is 100 μm. As can be seen from the figure, an increase rate of the detection sensitivity is larger for d2/d1 = 2 than for d2/d1 = 1. Therefore, d2/d1 > 1, that is, d2/t2 > d1/t1, so that the detection sensitivity can be further increased by making d1 and d2 deeper.

FIG. 10 shows a relationship between d2 and the detection sensitivity when d1 = d2 (□), d1 = 20 μm (▲), d1 = 40 μm (△), d1 = 60 μm (•), and d1 = 80 μm (○). The figure shows an approximation formula (1) which is a linear approximation of each point for d1 = d2, an approximation formula (2) which is a linear approximation of each point for d1 = 20 μm, an approximation formula (3) which is a linear approximation of each point for d1 = 40 μm, an approximation formula (4) which is a linear approximation of each point for d1 = 60 μm, and an approximation formula (5) which is a linear approximation of each point for d1 = 80 μm. Further, a value (= 0.872) at d2 = 100 μm in the approximation formula (1), that is, at d2 = t2 is obtained, and an intersection point p (■) between y = 0.872 and each of the approximation formulas (2) to (5) is shown.

y = 0.872 represents a sensitivity rate which is a limit in the configuration in the related art. FIG. 11 shows a relationship between d1/t1 and d2/t2, and the intersection points p in FIG. 10 are plotted. The figure shows an approximation formula (6) which is a linear approximation of each intersection point p. As described above, since y = 0.872 represents the sensitivity rate which is the limit in the configuration in the related art, when d2/t2 is equal to or larger than the approximation formula (6), that is, when d2/t2 is within a gray region in FIG. 11, the detection sensitivity cannot be reached in the configuration in the related art. Therefore, in the embodiment, d2/t2 ≥ 0.8661 × d1/t1 + 0.1582, and accordingly, the detection sensitivity cannot be reached by the configuration in the related art.

d1/t1 is not particularly limited, but d1/t1 ≥ 0.2 is preferred. Accordingly, the groove portions 316c and 316d do not become too shallow, and stress applied to the drive vibration arm 316 can be sufficiently reduced. Therefore, it is possible to effectively reduce damage to the drive vibration arm 316. d2/t2 is not particularly limited, but d2/t2 ≤ 0.9 is preferred. Accordingly, the groove portions 312c and 312d do not become too deep, and sufficiently high mechanical strength of the detection vibration arm 312 can be secured.

In particular, in the embodiment, the detection vibration arms 312 and 313 satisfy the above relationships with all the drive vibration arms 316, 317, 318, and 319, specifically, d2/t2 > d1/t1 and d2/t2 ≥ 0.8661 × d1/t1 + 0.1582. Accordingly, the above effect becomes more remarkable, and the detection sensitivity can be further increased. The present disclosure is not limited thereto, and at least one of the detection vibration arms 312 and 313 may satisfy the above relationship with at least one of the drive vibration arms 316, 317, 318, and 319.

The angular velocity sensor 100 has been described above. The angular velocity detection element 300 in such an angular velocity sensor 100 includes: the drive vibration arm 316 configured to perform flexural vibration according to an applied drive signal; and the detection vibration arm 312 configured to perform flexural vibration according to the applied angular velocity ωz. The drive vibration arm 316 has the bottomed groove portions 316c and 316d along an extending direction, and the detection vibration arm 312 has the bottomed groove portions 312c and 312d along the extending direction. d2/t2 > d1/t1, in which t1 is the thickness of the drive vibration arm 316, d1 is the depth of the groove portions 316c and 316d of the drive vibration arm 316, t2 is the thickness of the detection vibration arm 312, and d2 is the depth of the groove portions 312c and 312d of the detection vibration arm 312. According to such a configuration, the detection sensitivity can be further increased than that in the configuration in the related art by making d1 and d2 deeper.

As described above, in the angular velocity detection element 300, d2/t2 ≥ 0.8661 × d1/t1 + 0.1582. By satisfying such a relationship, it is possible to increase the detection sensitivity of the angular velocity ωz to a region which cannot be reached by the configuration in the related art. Therefore, the angular velocity detection element 300 having excellent detection accuracy of the angular velocity ωz is obtained.

As described above, in the angular velocity detection element 300, d1/t1 ≥ 0.2 is preferred. Accordingly, the groove portions 316c and 316d do not become too shallow, and stress applied to the drive vibration arm 316 can be sufficiently reduced. Therefore, it is possible to effectively reduce damage to the drive vibration arm 316.

As described above, in the angular velocity detection element 300, d2/t2 ≤ 0.9 is preferred. Accordingly, the groove portions 312c and 312d do not become too deep, and sufficiently high mechanical strength of the detection vibration arm 312 can be secured.

As described above, in the angular velocity detection element 300, d1/t1 ≥ 0.2, d2/t2 ≤ 0.9, and d2/t2 ≥ 0.8661 × d1/t1 + 0.1582. Accordingly, it is possible to effectively reduce damage to the detection vibration arm 312 and the drive vibration arm 316, and to increase the detection sensitivity to a region which cannot be reached by the configuration in the related art.

As described above, the angular velocity detection element 300 includes: the base portion 311; the pair of detection vibration arms 312 and 313 extending from the base portion 311 to the both sides in the Y-axis direction which is a first direction; the pair of support arms 314 and 315 extending from the base portion 311 to the both sides in the X-axis direction which is a second direction intersecting the Y-axis direction; the pair of drive vibration arms 316 and 317 extending from one support arm 314 to the both sides in the Y-axis direction; and the pair of drive vibration arms 318 and 319 extending from the other support arm 315 to the both sides in the Y-axis direction. According to such a configuration, the angular velocity detection element 300 can detect the angular velocity ωz around the Z-axis orthogonal to the X-axis and the Y-axis.

As described above, the detection vibration arm 312 includes the arm 312a provided with the groove portions 312c and 312d and the weight portion 312b positioned at the tip end side of the arm 312a and wider than the arm 312a, and the drive vibration arm 316 includes the arm 316a provided with the groove portions 316c and 316d and the weight portion 316b positioned at a tip end side of the arm 316a and wider than the arm 316a. Accordingly, by the mass effect of the weight portions 312b and 316b, the detection vibration arms 312 and the drive vibration arm 316 can be shortened to reduce the size of the angular velocity detection element 300, and the resonance frequency of the angular velocity detection element 300 can be lowered. When the vibration arms 312 and 316 have the same length, the arms 312a and 316a can be made thicker than in a configuration without the weight portions 312b and 316b, a thermoelastic loss during flexural vibration is reduced accordingly, and a Q value is increased.

As described above, the detection vibration arms 312 and 313 satisfy d2/t2 > d1/t1 for all the drive vibration arms 316, 317, 318, and 319. Accordingly, the detection sensitivity can be more reliably increased than that in the configuration in the related art by making d1 and d2 deeper.

As described above, the drive vibration arm 316 and the detection vibration arm 312 each have the upper surface 310a which is the first surface and the lower surface 310b which is the second surface, which are in a front and back relationship with each other, and the groove portions 316c, 316d, 312c, and 312d are formed in each of the upper surface 310a and the lower surface 310b. Accordingly, the groove portions 316c and 316d are symmetrically formed at front and back of the drive vibration arm 316, and the groove portions 312c and 312d are symmetrically formed at front and back of the detection vibration arm 312. Therefore, the flexural vibration of the drive vibration arm 316 and the detection vibration arm 312 in an off-plate direction can be prevented. Therefore, occurrence of spurious is reduced, and the angular velocity ωz can be detected with high accuracy.

As described above, the angular velocity sensor 100 includes the angular velocity detection element 300, and the control circuit 400 electrically coupled to the angular velocity detection element 300, and configured to supply the drive signal to the angular velocity detection element 300 and to detect the angular velocity ωz based on the flexural vibration of the detection vibration arm 312. Accordingly, an effect of the angular velocity detection element 300 described above can be obtained, and the angular velocity sensor 100 having excellent angular velocity detection accuracy is obtained.

The first embodiment has been described above. The configuration of the angular velocity detection element 300 is not particularly limited. For example, as shown in FIGS. 12 and 13, the groove portions 312d, 313d, 316d, 317d, 318d, and 319d at a lower surface 310b side may be omitted from the vibration arms 312, 313, 316, 317, 318, and 319. In this case, the depth of the groove portions 312c and 313c is d2, and a depth of the groove portions 316c, 317c, 318c, and 319c is d1.

Second Embodiment

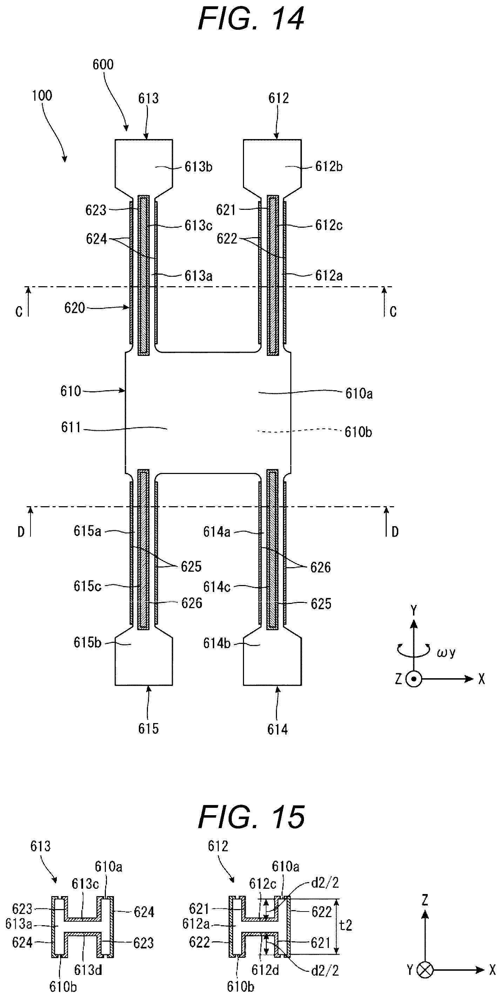

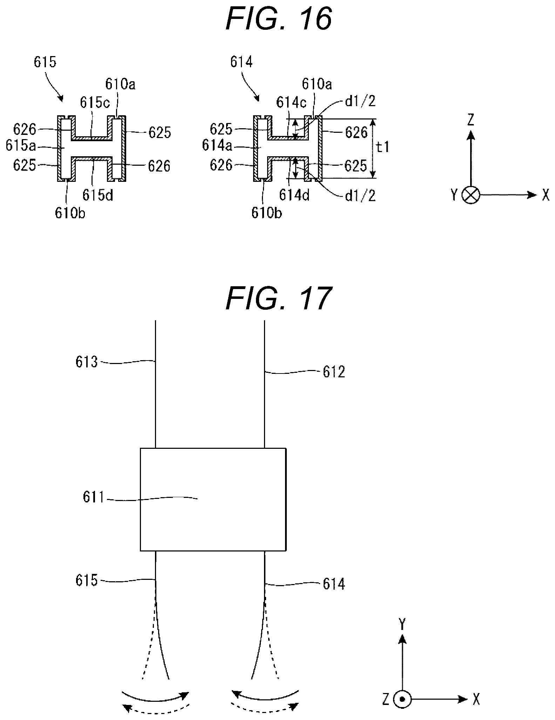

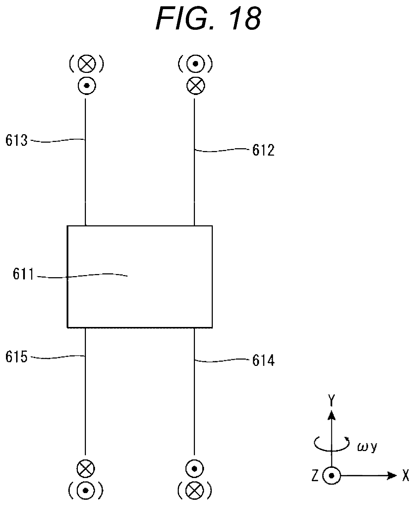

FIG. 14 is a plan view showing an angular velocity detection element according to a second embodiment. FIG. 15 is a cross-sectional view taken along a line C-C in FIG. 14. FIG. 16 is a cross-sectional view taken along a line D-D in FIG. 14. FIGS. 17 and 18 are schematic diagrams showing driving states of the angular velocity detection element shown in FIG. 14.

The angular velocity sensor 100 according to the embodiment is similar as the angular velocity sensor 100 of the first embodiment described above except that a configuration of the angular velocity detection element is different. In the following description, the angular velocity sensor 100 of the embodiment is described with a focus on differences from the above first embodiment, and the description for similar matters is omitted. In the drawings of the embodiment, configurations similar to those of the above embodiment will be denoted by the same reference signs.

In the angular velocity sensor 100 of the embodiment, an angular velocity detection element 600 is used instead of the angular velocity detection element 300. The angular velocity detection element 600 shown in FIGS. 14 to 16 can detect an angular velocity $\omega y$ around the Y-axis. Such an angular velocity detection element 600 includes a vibration substrate 610 formed by patterning a Z-cut quartz crystal substrate, and an electrode 620 deposited at a surface of the vibration substrate 610.

A constituent material for the vibration substrate 610 is not limited to quartz crystal, and various piezoelectric materials such as lithium niobate ($LiNbO_3$), lithium tantalate ($LiTaO_3$), lead zirconate titanate (PZT), lithium tetraborate ($Li_2B_4O_7$), and langasite crystal ($La_3Ga_5SiO_{14}$) can be used.

The vibration substrate 610 has a plate shape and has an upper surface 610a as a first surface and a lower surface 610b as a second surface, which are in a front and back relationship with each other. The vibration substrate 610 includes a base portion 611 positioned in a central portion of the vibration substrate 610, a pair of detection vibration arms 612 and 613 extending from the base portion 611 to the plus side in the Y-axis direction, and a pair of drive vibration arms 614 and 615 extending from the base portion 611 to the minus side in the Y-axis direction. The pair of detection vibration arms 612 and 613 are disposed side by side in the X-axis direction, and the pair of drive vibration arms 614 and 615 are disposed side by side in the X-axis direction.

The detection vibration arm 612 includes an arm 612a extending from the base portion 611 to the plus side in the Y-axis direction, and a weight portion 612b positioned at a tip end side of the arm 612a and having a width wider than that of the arm 612a. The detection vibration arm 612 includes a bottomed groove portion 612c formed in the upper surface 610a of the arm 612a and a bottomed groove portion 612d formed in the lower surface 610b of the arm 612a. The groove portions 612c and 612d are formed along the arm 612a and over substantially an entire region of the arm 612a in the longitudinal direction. The groove portions 612c and 612d are symmetrically formed.

The detection vibration arm 613 includes an arm 613a extending from the base portion 611 to the plus side in the Y-axis direction, and a weight portion 613b positioned at a tip end side of the arm 613a and having a width wider than that of the arm 613a. The detection vibration arm 613 includes a bottomed groove portion 613c formed in the upper surface 610a of the arm 613a and a bottomed groove portion 613d formed in the lower surface 610b of the arm 613a. The groove portions 613c and 613d are formed along the arm 613a and over substantially an entire region of the arm 613a in the longitudinal direction. The groove portions 613c and 613d are symmetrically formed.

The drive vibration arm 614 includes an arm 614a extending from the base portion 611 to the minus side in the Y-axis direction, and a weight portion 614b positioned at a tip end side of the arm 614a and having a width wider than that of the arm 614a. The drive vibration arm 614 includes a bottomed groove portion 614c formed in the upper surface 610a of the arm 614a and a bottomed groove portion 614d formed in the lower surface 610b of the arm 614a. The groove portions 614c and 614d are formed along the arm 614a and over substantially an entire region of the arm 614a in the longitudinal direction. The groove portions 614c and 614d are symmetrically formed.

The drive vibration arm 615 includes an arm 615a extending from the base portion 611 to the minus side in the Y-axis direction, and a weight portion 615b positioned at a tip end side of the arm 615a and having a width wider than that of the arm 615a. The drive vibration arm 615 includes a bottomed groove portion 615c formed in the upper surface 610a of the arm 615a and a bottomed groove portion 615d formed in the lower surface 610b of the arm 615a. The groove portions 615c and 615d are formed along the arm 615a and over substantially an entire region of the arm 615a in the longitudinal direction. The groove portions 615c and 615d are symmetrically formed.

A relationship between d2/t2 for the detection vibration arms 612 and 613 and d1/t1 for the drive vibration arms 614 and 615 is similar as that in the above first embodiment.

The electrode 620 includes first detection signal electrodes 621, first detection ground electrodes 622, second detection signal electrodes 623, second detection ground electrodes 624, drive signal electrodes 625, and drive ground electrodes 626.

The first detection signal electrodes 621 are disposed at the upper surface 610a and the lower surface 610b of the detection vibration arm 612, and the first detection ground electrodes 622 are disposed at both side surfaces of the detection vibration arm 612. The second detection signal electrodes 623 are disposed at the upper surface 610a and the lower surface 610b of the detection vibration arm 613, and the second detection ground electrodes 624 are disposed at both side surfaces of the detection vibration arm 613. The drive signal electrodes 625 are disposed at the upper surface 610a and the lower surface 610b of the drive vibration arm 614 and at both side surfaces of the drive vibration arm 615, and the drive ground electrodes 626 are disposed at both side surfaces of the drive vibration arm 614 and at the upper surface 610a and the lower surface 610b of the drive vibration arm 615.

The angular velocity detection element 600 having such a configuration detects the angular velocity $\omega y$ around the Y-axis as follows. When drive signals are applied between the drive signal electrodes 625 and the drive ground electrodes 626, as shown in FIG. 17, the drive vibration arm 614 and 615 perform flexural vibration in opposite phases in the X-axis direction. In this state, vibration of the drive vibration arms 614 and 615 is cancelled, and the detection vibration arms 612 and 613 do not vibrate. In this state, when the angular velocity ωy is applied to the angular velocity detection element 600, as shown in FIG. 18, Coriolis force acts on the drive vibration arms 614 and 615 to excite flexural vibration in the Z-axis direction, and the detection vibration arms 612 and 613 perform flexural vibration in the Z-axis direction in response to the flexural vibration. An electric charge generated in the detection vibration arm 612 by such flexural vibration is taken out as a first detection signal from the first detection signal electrodes 621, an electric charge generated in the detection vibration arm 613 is taken out as a second detection signal from the second detection signal electrodes 623, and the angular velocity ωy is obtained based on the first detection signal and the second detection signal. Since the first detection signal and the second detection signal have opposite phases, the angular velocity ωy can be detected more accurately by using a differential detection method.

The second embodiment as described above can also exert a similar effect as the above first embodiment.

Although the angular velocity detection element and the angular velocity sensor of the present disclosure have been described above based on the shown embodiments, the present disclosure is not limited thereto, and a configuration of each unit can be replaced with any configuration having a similar function. Any other components may be added to the present disclosure.

**Claims**

1.  An angular velocity detection element comprising:

    a drive vibration arm configured to perform flexural vibration according to an applied drive signal; and
    a detection vibration arm configured to perform flexural vibration according to an applied angular velocity, wherein each of the drive vibration arm and the detection vibration arm has a bottomed groove portion along an extending direction, **characterized in that**
    $d2/t2 > d1/t1$, in which t1 is a thickness of the drive vibration arm, d1 is a depth of the groove portion of the drive vibration arm, t2 is a thickness of the detection vibration arm, and d2 is a depth of the groove portion of the detection vibration arm.

2.  The angular velocity detection element according to claim 1, wherein

$$d2/t2 \geq 0.8661 \times d1/t1 + 0.1582.$$

3.  The angular velocity detection element according to claim 1 or 2, wherein

$$d1/t1 \geq 0.2.$$

4.  The angular velocity detection element according to any one of claims 1 to 3, wherein

$$d2/t2 \leq 0.9.$$

5.  The angular velocity detection element according to any one of claims 1 to 4, wherein
    the drive vibration arm and the detection vibration arm each have a first surface and a second surface which are in a front and back relationship with each other, and the groove portion is formed in each of the first surface and the second surface.

6.  The angular velocity detection element according to any one of claims 1 to 4, further comprising:

    a base portion;
    a pair of the detection vibration arms extending from the base portion to both sides in a first direction;
    a pair of support arms extending from the base portion to both sides in a second direction intersecting the first direction;
    a pair of the drive vibration arms extending from one of the support arms to the both sides in the first direction; and
    a pair of the drive vibration arms extending from the other of the support arms to the both sides in the first direction.

7.  The angular velocity detection element according to claim 6, wherein
    each of the detection vibration arms and the drive vibration arms includes an arm provided with the groove portion and
    a weight portion positioned at a tip end side of the arm and wider than the arm.

8.  The angular velocity detection element according to claim 6 or 7, wherein
    the detection vibration arms satisfy d2/t2 > d1/t1 for all the drive vibration arms.

9.  The angular velocity detection element according to any one of claims 6 to 8, wherein
    the drive vibration arms and the detection vibration arms each have a first surface and a second surface which are in a
    front and back relationship with each other, and the groove portion is formed in each of the first surface and the second
    surface.

10. An angular velocity sensor comprising:

    the angular velocity detection element according to any one of claims 1 to 9; and
    a control circuit electrically coupled to the angular velocity detection element, and configured to supply the drive
    signal to the angular velocity detection element and to detect an angular velocity based on the flexural vibration.

**Patentansprüche**

1.  Element zum Erkennen der Winkelgeschwindigkeit, umfassend:

    einen Antriebsvibrationsarm, der eingerichtet ist, Biegevibration gemäß einem angelegten Antriebssignal
    durchzuführen; und
    einen Erkennungsvibrationsarm, der eingerichtet ist, Biegevibration gemäß einer angelegten Winkelgeschwindigkeit durchzuführen, wobei
    jeder von dem Antriebsvibrationsarm und dem Erkennungsvibrationsarm einen Nutabschnitt mit Boden entlang
    einer Erstreckungsrichtung aufweist, **dadurch gekennzeichnet, dass**
    d2/t2 > d1/t1, wobei t1 eine Dicke des Antriebsvibrationsarms ist, d1 eine Tiefe des Nutabschnitts des Antriebsvibrationsarms ist, t2 eine Dicke des Erkennungsvibrationsarms ist und d2 eine Tiefe des Nutabschnitts des
    Erkennungsvibrationsarms ist.

2.  Element zum Erkennen der Winkelgeschwindigkeit nach Anspruch **1,** wobei

    $$d2/t2 \geq 0,8661 \times d1/t1 + 0,1582.$$

3.  Element zum Erkennen der Winkelgeschwindigkeit nach Anspruch 1 oder **2,** wobei

    $$d1/t1 \geq 0,2.$$

4.  Element zum Erkennen der Winkelgeschwindigkeit nach einem der Ansprüche 1 bis **3,** wobei

    $$d2/t2 \leq 0,9.$$

5.  Element zum Erkennen der Winkelgeschwindigkeit nach einem der Ansprüche 1 bis 4, wobei
    der Antriebsvibrationsarm und der Erkennungsvibrationsarm jeweils eine erste Oberfläche und eine zweite Oberfläche aufweisen, die in einem Vorder- und Rückseitenverhältnis zueinander sind, und der Nutabschnitt in jeder der
    ersten Oberfläche und der zweiten Oberfläche gebildet **ist.**

6.  Element zum Erkennen der Winkelgeschwindigkeit nach einem der Ansprüche 1 bis 4, weiter umfassend:

    einen Basisabschnitt;
    ein Paar der Erkennungsvibrationsarme, das sich von dem Basisabschnitt zu beiden Seiten in einer ersten
    Richtung erstreckt;

ein Paar Trägerarme, das sich von dem Basisabschnitt zu beiden Seiten in einer zweiten Richtung erstreckt, die die erste Richtung schneidet;

ein Paar der Antriebsvibrationsarme, das sich von einem der Trägerarme zu den beiden Seiten in der ersten Richtung erstreckt; und

ein Paar der Antriebsvibrationsarme, das sich von dem anderen der Trägerarme zu den beiden Seiten in der ersten Richtung erstreckt.

7. Element zum Erkennen der Winkelgeschwindigkeit nach Anspruch 6, wobei

jeder der Erkennungsvibrationsarme und der Antriebsvibrationsarme einen Arm enthält, der mit dem Nutabschnitt und einem Gewichtsabschnitt bereitgestellt ist, der an einer Spitzenendseite des Arms positioniert ist und breiter als der Arm **ist.**

8. Element zum Erkennen der Winkelgeschwindigkeit 6 oder 7, wobei

die Erkennungsvibrationsarme d2/t2 > d1/t1 für alle Antriebsvibrationsarme erfüllen.

9. Element zum Erkennen der Winkelgeschwindigkeit nach einem der Ansprüche 6 bis 8, wobei

die Antriebsvibrationsarme und die Erkennungsvibrationsarme jeweils eine erste Oberfläche und eine zweite Oberfläche aufweisen, die in einem Vorder- und Rückseitenverhältnis zueinander sind, und der Nutabschnitt in jeder der ersten Oberfläche und der zweiten Oberfläche gebildet **ist.**

10. Winkelgeschwindigkeitssensor, umfassend:

das Element zum Erkennen der Winkelgeschwindigkeit nach einem der Ansprüche 1 bis **9;** und

eine Steuerschaltung, die elektrisch an das Element zum Erkennen der Winkelgeschwindigkeit gekoppelt ist und eingerichtet ist, dem Element zum Erkennen der Winkelgeschwindigkeit das Antriebssignal zuzuleiten und eine Winkelgeschwindigkeit basierend auf der Biegevibration zu erkennen.

**Revendications**

1. Élément de détection de vitesse angulaire comprenant :

un bras de vibration d'entraînement configuré pour produire des vibrations de flexion en fonction d'un signal d'entraînement appliqué ; et

un bras de vibration de détection configuré pour produire des vibrations de flexion en fonction d'une vitesse angulaire appliquée, dans lequel

chacun parmi le bras de vibration d'entraînement et le bras de vibration de détection comporte une portion de rainure dotée d'un fond le long d'une direction d'extension, **caractérisé en ce que**

$d2/t2 > d1/t1$, où t1 est une épaisseur du bras de vibration d'entraînement, d1 est une profondeur de la portion de rainure du bras de vibration d'entraînement, t2 est une épaisseur du bras de vibration de détection, et d2 est une profondeur de la portion de rainure du bras de vibration de détection.

2. Élément de détection de vitesse angulaire selon la revendication 1, dans lequel

$$d2/t2 \le 0,8661 \times d1/t1 + 0,1582.$$

3. Élément de détection de vitesse angulaire selon la revendication 1 ou 2, dans lequel

$$d1/t1 \ge 0,2.$$

4. Élément de détection de vitesse angulaire selon l'une quelconque des revendications 1 à 3, dans lequel

$$d2/t2 \le 0,9.$$

5. Élément de détection de vitesse angulaire selon l'une quelconque des revendications 1 à 4, dans lequel

le bras de vibration d'entraînement et le bras de vibration de détection comportent respectivement une première surface et une deuxième surface, lesquelles sont dans une relation avant et arrière l'une par rapport à l'autre, et la portion de rainure est formée dans chacune parmi la première surface et la deuxième surface.

6. Élément de détection de vitesse angulaire selon l'une quelconque des revendications 1 à 4, comprenant en outre :

une portion de base ;
une paire de bras de vibration de détection s'étendant à partir de la portion de base vers les deux côtés dans une première direction ;
une paire de bras de support s'étendant à partir de la portion de base vers les deux côtés dans une deuxième direction coupant la première direction ;
une paire de bras de vibration d'entraînement s'étendant à partir de l'un des bras de support vers les deux côtés dans la première direction ; et
une paire de bras de vibration d'entraînement s'étendant à partir de l'autre des bras de support vers les deux côtés dans la première direction.

7. Élément de détection de vitesse angulaire selon la revendication 6, dans lequel
chacun des bras de vibration de détection et des bras de vibration d'entraînement inclut un bras doté d'une portion de rainure et d'une portion de poids positionnée sur un côté d'extrémité de pointe du bras et plus large que le bras.

8. Élément de détection de vitesse angulaire selon la revendication 6 ou 7, dans lequel
les bras de vibration de détection satisfont d2/t2 > d1/t1 pour tous les bras de vibration d'entraînement.

9. Élément de détection de vitesse angulaire selon l'une quelconque des revendications 6 à 8, dans lequel
les bras de vibration d'entraînement et les bras de vibration de détection comportent respectivement une première surface et une deuxième surface, lesquelles sont dans une relation avant et arrière l'une par rapport à l'autre, et la portion de rainure est formée dans chacune parmi la première surface et la deuxième surface.

10. Capteur de vitesse angulaire comprenant :

l'élément de détection de vitesse angulaire selon l'une quelconque des revendications 1 à 9 ; et
un circuit de commande accouplé électriquement à l'élément de détection de vitesse angulaire, et configuré pour fournir le signal d'entraînement à l'élément de détection de vitesse angulaire et pour détecter une vitesse angulaire sur la base des vibrations de flexion.

# FIG. 1

## FIG. 2

## FIG. 3

# FIG. 4

# FIG. 5

## FIG. 6

## FIG. 7

## FIG. 8

## FIG. 9

## FIG. 10

## FIG. 11

## FIG. 12

## FIG. 13

# FIG. 14

# FIG. 15

## FIG. 16

## FIG. 17

# FIG. 18

**EP 4 361 559 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003166828 A